# EUROPEAN PATENT SPECIFICATION

(11) **EP 1 193 422 B1**
(45) Date of publication and mention of the grant of the patent: **21.01.2004**
(21) Application number: 00308627.9
(22) Date of filing: 29.09.2000
(51) Int. Cl.: F16H 25/22

(54) **Screw assembly having deflector and method of manufacturing same**
Kugelumlaufspindel mit Umlenkelement und Verfahren zu dessen Herstellung
Vis-écrous à billes avec guide de transfer et son procédé de fabrication

(43) Date of publication of application: 03.04.2002
(73) Proprietor: THK Co., Ltd., Shinagawa-ku, Tokyo-to (JP); PGM Ballscrews Ltd., Wyken, Coventry CV2 5DZ (GB)
(72) Inventor: Mitchell, Mark, Wyken, Coventry CV2 5DZ (GB); Moghadam, Mehdi, Wyken, Coventry CV2 5DZ (GB); Young, Jack, Wyken, Coventry CV2 5DZ (GB); Suzuki, Kunitaka, Wyken, Coventry CV2 5DZ (GB)
(74) Representative: Needle, Jacqueline

(56) References cited:
- FR-A- 2 208 490
- FR-A- 2 703 122
- US-A- 5 937 700

## Description

The present invention relates to a screw assembly and a method of manufacturing the same.

For example, the invention is concerned with a ballscrew assembly, in which a number of rolling members, such as balls, are disposed between a screw shaft and a nut member for circulation. The particular screw assembly has a deflector for returning rolling members rolling along one turn of a groove formed in the screw shaft to a portion of a preceding turn thereof.

There is known in the prior art a ballscrew assembly in which a number of balls disposed between a screw shaft and a nut member circulate. In such ballscrew assembly, a ball rolling groove having a predetermined lead is formed to an outer peripheral surface of the screw shaft, the ball rolling groove constituting a track along which the balls roll. On its inner peripheral surface, the nut member has a loaded ball rolling groove opposed to the ball rolling groove of the screw shaft. The loaded ball rolling groove also constitutes a track along which the balls roll. The balls are accommodated and arranged between these ball rolling grooves of the screw shaft and the nut member when assembled.

Furthermore, the nut member is formed with a return passage connecting one end of the loaded ball rolling groove to the other one end thereof so as to return the balls rolling in the ball rolling groove from one end to the other end thereof, thus enabling the balls to circulate. The return passage may be constituted by various kinds of members such as a return pipe, and as one example, there is known a deflector for returning the balls rolling in the ball rolling groove to a portion of the preceding one turn of the ball rolling groove.

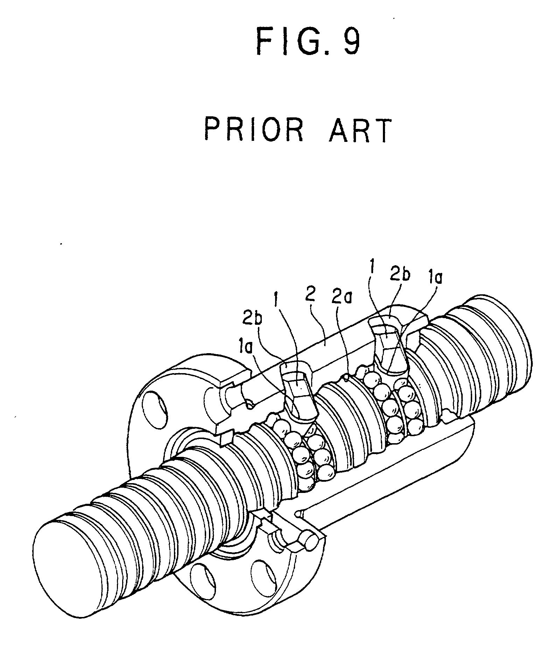

More specifically, FIG. 9 is a perspective view of a ballscrew of known structure provided with such deflectors 1, 1. The ballscrew is fitted to a nut member 2 formed with a loaded ball rolling groove 2a in a spiral shape having a plurality of turns. Each of the deflectors 1, 1 is formed with a ball return groove substantially in shape of "S" having one end connected to one turn of the loaded ball rolling groove 2a and another one end connected to another one turn, i.e. the preceding one turn of the loaded ball rolling groove 2a. The deflectors 1, 1 are fitted into deflector insertion holes 2b, 2b from the outside of the nut member 2. The deflectors 1, 1 are provided with flanged portions 1a, 1a for mounting the deflectors 1, 1 to the nut member 2, and on the other hand, the nut member 2 is formed with deflector insertion holds 2b, 2b including a difference in level so as to engage with the flanged portions 1a, 1 a. The deflectors 1, 1 are fitted into the insertion holes 2b, 2b from the outside of the nut member 2. After the deflectors 1, 1 have been positioned so that the loaded ball rolling groove 2a of the nut member 2 is continuously connected to the ball return grooves of the deflectors 1, 1, the deflectors 1, 1 are secured to the nut member 2 by means of bolts or bonding agent.

However, with a ballscrew assembly provided with such known deflectors, it is necessary to position the deflectors during assembly and to secure them to the nut member 2 by means of bolts or a bonding agent. This requires both assembling time and assembling cost, and is thus disadvantageous. Moreover, as the deflectors are fixed to the nut member with no play, large impacts will be applied to the deflectors when the balls roll, and in such case, the balls will not circulate smoothly.

FR-A-2703122 shows an example of a screw assembly having a deflector which is inserted into the nut member with play to assist with the circulation of the balls.

However, there is also a fear that any particles such as dust, tips, swarf or the like, or liquids such as coolants, may invade the workings of the screw member through the slight gap between the side surfaces of the deflectors and the deflector insertion holes.

FR-A-2208490 describes a screw assembly comprising a screw shaft having an outer peripheral surface on which is formed a first groove in the form of a spiral having a plurality of turns, a nut member having an inner peripheral surface on which is formed a second groove in the form of a spiral, and a number of rolling members arranged to be accommodated between said first and second grooves when the nut member is assembled on the screw shaft, and the screw assembly further comprising a deflector mounted on said nut member and arranged to return a rolling member rolling on one turn of said first groove to a portion of a preceding turn thereof, wherein
said deflector comprises a deflector body provided with a return groove for returning the rolling member, and a pair of wing portions each projecting from a respective side portion of the deflector body and being shaped to fit into said second groove,
said nut member has a deflector insertion hole, and
an elastic seal member is provided around the deflector body so as to seal an interior of the screw assembly, said seal member being an O ring and being fitted in an annular groove formed in a circumferential portion of a side surface of the defector body.

It is an object of the present invention to improve a screw assembly of this type.

According to claim 1 of the present invention a screw assembly as defined above is characterised in that said O ring is formed of silicone, and in that the deflector insertion hole is arranged to enable rocking of the deflector in operation.

Embodiments of a screw assembly of the invention are capable of reducing the assembling time and cost, reducing the impact of rolling members against the deflectors to facilitate smooth circulation of the rolling members, and of substantially eliminating the invasion of the particles or liquid into the working of the screw assembly through small gaps or clearances between the deflectors and the deflector insertion holes.

In an embodiment, rocking of the deflector in operation is enabled by a clearance between the deflector insertion hole and the deflector body inserted therein, and wherein the deflector formed with the O ring has been inserted into the deflector insertion hole from an inside of the nut member.

Preferably, an edge portion of the deflector insertion hole on the inner peripheral side of the nut member is formed to be round or is chamfered.

The rolling members are preferably balls.

A plurality of deflectors may be mounted on the nut member and a plurality of deflector insertion holes may be formed in the nut member.

In an embodiment, the return groove formed in the or each deflector body has substantially an S-shape suitable for returning the rolling member on one turn of the first groove to the preceding turn.

The invention also extends to a method of manufacturing a screw assembly comprising mounting a nut member having an inner peripheral surface in which a second rolling groove is formed on a screw shaft having an outer peripheral surface in which a first rolling groove is formed, said first groove being spiral in form and having a plurality of turns, and mounting a deflector on the nut member such that the deflector is arranged to return a rolling member rolling on one turn of the first groove to a portion of the preceding turn thereof,
wherein the deflector is composed of a deflector body formed with a return groove through which the rolling member returns and wing portions projecting from respective side portions of the deflector body, the wing portions having a shape in conformity with the shape of said second groove so as to be fitted thereto, a seal member having an elasticity is provided around the deflector body so as to seal an interior of the screw assembly, said seal member being an O ring fitted into an annular groove formed in a circumferential portion of a side surface of the deflector body, and a deflector insertion hole is formed in the nut member,
characterised in that said O ring is formed of silicone, and in that said deflector insertion hole is arranged to enable rocking of the deflector in operation.

In an embodiment, a clearance is provided between the deflector insertion hole and the deflector body when inserted therein, and the deflector provided with the O ring is inserted into the deflector insertion hole from the inside of the nut member.

In a preferred embodiment, an edge portion of the deflector insertion hole on the inner peripheral side of the nut member is removed so as to provide a round surface. This removes any sharp edges and facilitates the insertion of the deflector into the deflector insertion hole.

Preferably, the wing portions of the deflector, which is inserted from the inner side of the nut member, are fitted to the second groove, so that the deflector can be easily positioned with respect to the nut member. The deflector, once inserted and positioned in the nut member, is then also held by the O ring around the deflector on the sides of the slot of the nut member due to the elastic force exerted by the O ring on the side face of the slot of the nut member. This is an important feature which provides flexibility in assembly process design, such as enabling pre-assembly of ball nut and deflector first, prior to final assembly of ball nut onto screw shaft. Hence, time and cost required for assembling the screw assembly can be reduced. Furthermore, since there is the clearance between the deflector insertion hole and the side portion of the deflector body so that the deflector can rock therein, even if the rolling member collides against the deflector during the circulation rolling thereof, the deflector rocks and the colliding impact could be absorbed to thereby achieve the smooth circulation of the rolling members.

Furthermore, as the O ring has elasticity and is disposed around the side surface of the deflector body to seal the interior of the screw assembly, the O ring allows the deflector to rock in operation and also prevents any contamination (contaminant) from getting into the assembly. Thus, swarf, dust or like particles can be prevented from invading into the working of the assembly through the small clearance between the deflector body and the deflector insertion hole.

The seal member around the deflector also makes the assembly less noisy, by stopping the deflector rattling against the wall portion of the deflector insertion hole in the nut member.

Since the O ring seal member is easily formed around the deflector body, the assembling time and cost can be reduced. Further, since the O ring is formed of silicone, which has the property of being easily compressed, the deflector body can be easily inserted into the deflector insertion hole, and moreover, the invasion of the contamination or the like into the inside of the assembly can be prevented with certainty even though the deflector rocks.

Embodiments of the present invention will hereinafter be described, by way of example, with reference to the accompanying drawings, in which:
FIG. 1 is a perspective view of a screw assembly for a rolling member according to one embodiment of the present invention, in which a nut member is shown partially as a sectional view;
FIG. 2 is a plan view of the nut member to be assembled with the screw shaft;
FIG. 3 is a side view of the nut member;
FIG. 4 is a side view of a deflector to be assembled with the screw assembly of FIG. 1;
FIG. 5 is a bottom view of the deflector of FIG. 4;
FIG. 6 is a view showing a positional arrangement of the nut member and the deflector;
FIG. 7 is a plan view showing the nut member and the deflector; and
FIG. 8 is a view of the nut member including (A) showing a side view of the nut member and (B) showing a sectional view taken along the line VIII-VIII of (A);
FIG. 9 is a perspective view of a ballscrew assembly provided with deflectors of a conventional structure.

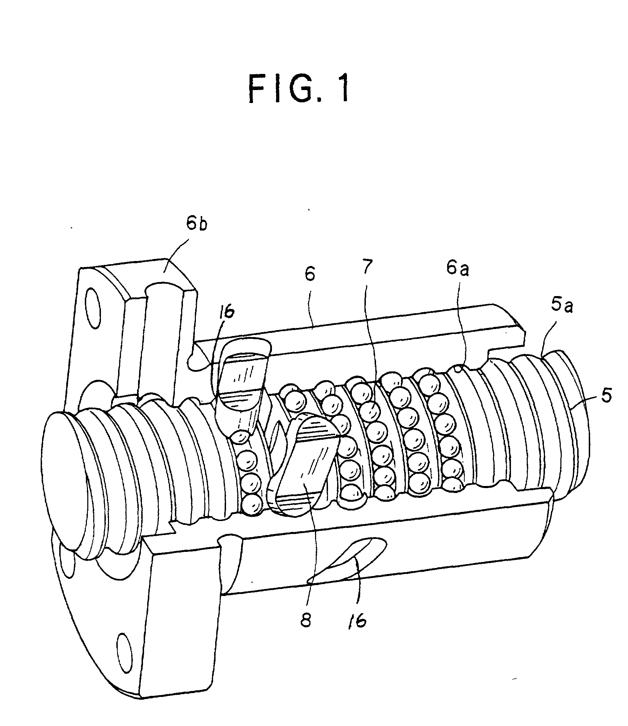

FIG. 1 shows a screw assembly provided with a deflector according to the first embodiment of the present invention.

With reference to FIG. 1, balls are utilized as rolling members of a screw assembly provided with deflectors and the balls roll along the circumferential surface of a screw shaft and return to a spiral screw groove from a portion of one turn to a portion of another turn, i.e. the proceeding one turn, of the spiral screw groove, which will be described in detail hereunder.

The screw assembly provided with the deflectors comprises a screw shaft 5, a nut member 6 mounted to the screw shaft and a number of rolling members 7, 7, ---, 7, i.e. balls in this embodiment. The screw shaft 5 is formed, at its peripheral surface, with a ball rolling groove 5a in shape of spiral (rolling member rolling groove). The nut member 6 mounted to the screw shaft 5 is formed, at its inner peripheral surface, with a loaded ball rolling groove 6a in shape of spiral (loaded rolling member rolling groove), which corresponds, in position, to the ball rolling groove 5a of the screw shaft 5. The number of balls 7, 7, ---, 7 are accommodated and arranged in an endless circulation passage including a loaded rolling passage formed by the corresponding ball rolling groove 5a and the loaded ball rolling groove 6a.

The nut member 6 is mounted with deflectors 8, 8, ---, 8, called as winged deflectors, each of which acts to scoop the balls 7 rolling in one turn of the spiral ball rolling groove Sa and return the balls 7 to the preceding one turn thereof (prior to the turn at which the balls 7 are scooped). Each of the deflectors 8 is formed with a return groove having one end communicated with one turn of the loaded ball rolling groove 6a of the nut member 6 and another end communicated with a preceding one turn thereof. Although the detailed structure of the deflector itself will be described hereinafter, the deflector 8 acts to scoop the balls 7 rolling along the ball rolling groove 5a of the screw shaft 5 towards a radial direction thereof, to get over a screw thread of the screw shaft 5 and to return the balls 7 to the portion of the preceding one turn of the ball rolling groove 5a (before one lead), thus circulating the balls 7.

The loaded rolling groove and a return passage formed by this return groove constitute an endless circulation passage substantially in an annular shape at a portion outside the screw shaft 5. In accordance with the relative rotation of the screw shaft 5 with respect to the nut member 6, the balls 7, 7, ---, 7 roll between the ball rolling groove 5a and the loaded ball rolling groove 6a, and at the same time, the nut member 6 carries out a linear motion with respect to the screw shaft 5 in an axial direction thereof.

As mentioned before, on the outer peripheral surface of the screw shaft 5, there is formed a spiral ball rolling groove 5a with a predetermined lead. This ball rolling groove 5a has an approximately semi-circular cross section having a radius of curvature slightly larger than a radius of each ball 7. Further, the ball rolling groove 5a may be formed so as to have a cross sectional shape providing a single arc (i.e. circular arc groove) in which the ball 7 contacts the ball rolling groove 5a at one point at a bottom of the ball rolling groove 5a, or providing two arcs (i.e. Gothic arch groove) in which the ball 7 contacts the ball rolling groove 5a at two points.

The nut member 6 has an inner diameter larger than an outer diameter of the screw shaft 5, and the nut member is fitted or mounted to the screw shaft with a predetermined gap. The nut member 6 has substantially a cylindrical shape and is provided with a flanged portion 6b at one end portion thereof to be connected to a member as an object to be guided by the screw assembly. The spiral loaded ball rolling groove 6a formed to the inner peripheral surface of the nut member 6 has a lead equal to that of the screw shaft. The loaded ball rolling groove 6a has also an approximately semi-circular cross section having a radius of curvature slightly larger than the radius of the ball 7. Further, the loaded ball rolling groove 6a may be formed so as to have a cross sectional shape providing a single arc (i.e. circular arc groove) in which the ball 7 contacts the loaded ball rolling groove 6a at one point at a bottom thereof, or providing two arcs (i.e. Gothic arch groove) in which the ball 7 contacts the loaded ball rolling groove 6a at two points. The loaded rolling passage is composed by the opposed ball rolling groove Sa of the screw shaft 5 and the loaded ball rolling groove 6a of the nut member 6 so as to provide a substantially circular cross sectional shape.

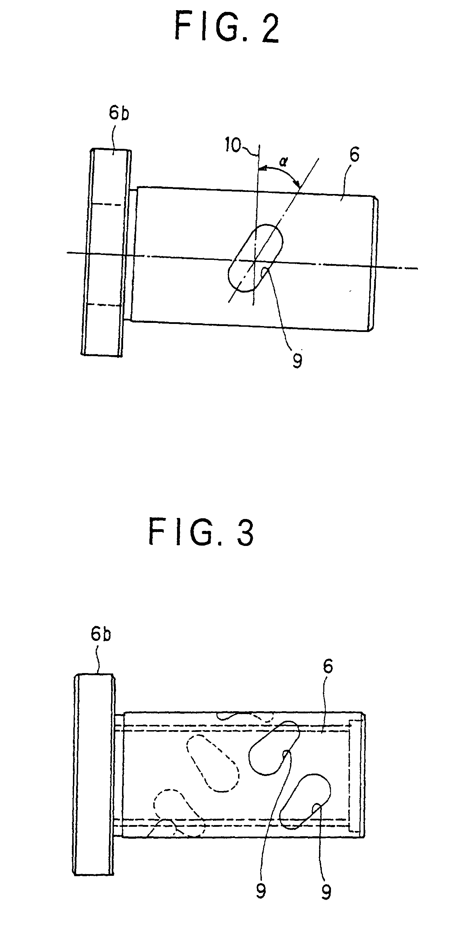

FIGs. 2 and 3 illustrate the nut member 6, which is formed with deflector insertion (fitting or mounting) holes 9, 9 ---, 9 for mounting the deflectors 8, 8 ---, 8, respectively. Each of the deflector insertion holes 9 is composed of a slot penetrating the nut member 6 from the outer peripheral side to the inner peripheral side thereof. Such deflector insertion hole (slot) 9 will be formed, for example, by means of end mill in a manner of crossing the end mill with respect to the center line of the nut member 6. More specifically, the deflector insertion hole 9 is formed by moving the end mill in a direction inclining by an angle α with respect to a line normal to the center line of the nut member 6. This inclination angle α is preferably set to about 20 to 40 degree so that the rolling direction of the balls 7 rolling in the ball rolling groove 5a is not rapidly changed at the return groove formed to the deflector 8. Further, one deflector 8 is arranged to one turn of the balls 7 accommodated in the ballscrew. Since the number of turns of the balls 7 is decided in accordance with a load applied to the ballscrew and so on, the number of the deflectors 8 is also optionally decided in accordance with a load applied to the ballscrew (for example, as six deflectors 8).

A plurality of such deflector insertion holes 9, 9 ---, 9 are formed and arranged along the circumferential direction of the nut member 6 with equal interval so that adjacent two deflector insertion holes 9, 9 are separated from each other by an interval more than one lead in the axial direction of the nut member 6. The size of the deflector insertion hole 9 is set so as to be slightly larger than an outer structure of the deflector 8 to provide a small gap between the deflector 8 and the deflector insertion hole 9, though mentioned in detail hereinafter.

A number of balls 7 are accommodated and arranged between the loaded ball rolling groove 6a of the nut member 6 and the ball rolling groove 5a of the screw shaft 5, and through these balls 7, the nut member 6 and the screw shaft 5 are supported with a predetermined gap therebetween.

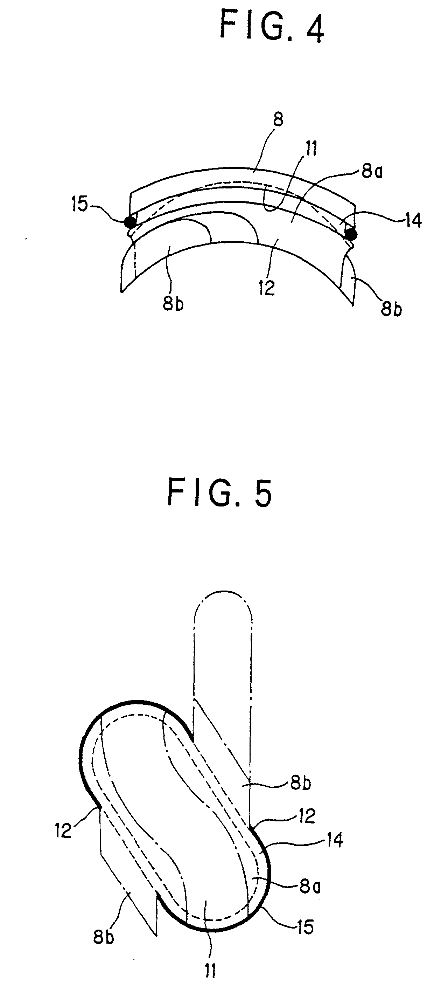

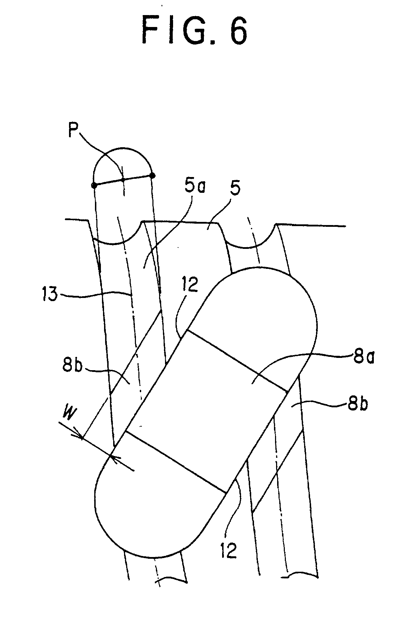

FIGs. 4 to 6 show the detailed structure of the deflector 8 which is inserted into the deflector insertion hole 9, in which FIG. 4 is a side view of the deflector 8, FIG. 5 is a bottom view thereof, and FIG. 6 is a view showing a positional relationship between the screw shaft 5 and the deflector 8.

With reference to FIGs. 4 to 6, the deflector 8 comprises a deflector body 8a formed with the return groove for returning the balls 7 and a pair of wing portions 8b, 8b projecting from both side portions 12, 12 of the deflector body 8a, the wing portions 8b, 8b having a shape corresponding to the shape of the loaded ball rolling groove 6a of the nut member 6 to be fitted thereto. The deflector 8 is manufactured through, for example, an injection molding process of a synthetic resin material.

The deflector body 8a has a planer shape having a square shape at its central portion and a semi-circular shape at both end portions thereof. The side surface of the deflector 8a has a circular arc shape in conformity with the circular shape in section of the nut member 6. The bottom surface of the deflector 8 is formed with a return groove 11 having substantially S-shape for changing the ball rolling direction so as to return the balls 7 rolling in one turn of the ball rolling groove 5a of the screw shaft 5 to a portion, proceeding by one turn, of the ball rolling groove 5a. Further, the return groove 11 having a deepest portion at the central portion of the deflector body 8a so that the balls 7 advancing in the return groove 11 can get over (ride across) the outer diameter portion of the screw shaft 5.

The paired wing portions 8b, 8b are formed so as to project from the side surfaces 12, 12 of the deflector body 8 by shifting them by an amount corresponding to one lead so that the respective wing portions 8b, 8b are fitted to the adjacent loaded ball rolling groove 6a of the nut member 6. Each of the wing portions 8b, 8b is formed so as to provide a spiral cylindrical shape to conform with the shape of the loaded ball rolling groove 6a and is also formed to provide a semi-circular shape in section so as to avoid an interference with the ball rolling groove 5a (see FIG. 6).

The central point P of the semi-circle of the wing portion 8b is always positioned on the center line 13 of a track of the balls 7. The radius of curvature of this semi-circle is the same as the radius of the ball 7 and is set to be slightly smaller than the radius of curvature of the loaded ball rolling groove 6a. That is, a small clearance is also formed between the wing portions 8b, 8b and the loaded ball rolling groove 6a. According to the structures that the defector body 8a and the deflector insertion hole 9 are arranged with the small clearance therebetween, as mentioned before, and that the wing portions 8b, 8b and the loaded ball rolling groove 6a are arranged also with the small clearance therebetween, the deflector 8 can be rocked (swung) with respect to the nut member 6. The length W of the wing portion 8b is set to 0.5 to 0.6 times the diameter of the ball 7.

Now, with reference to FIGs. 4 and 5, an annular groove 14 is formed around the side surface 12 of the deflector body 8a at a molding time thereof. Before the insertion of the deflector 8 into the nut member 6, an annular seal member (0 ring) 15 having elasticity is fitted to the annular groove 14 so as to seal an inside portion of the ballscrew assembly. The O ring 15 has an outer peripheral portion, which can slide against an inner wall surface of the deflector insertion hole 9 while tightly contacting thereto. The O ring 15 prevents contaminated material from invading into an inner structure of the ballscrew assembly, but does not prevent the deflector from being rocked in operation.

The O ring 15 might have been formed of one of a number of materials if the requirement were just that it be resistant to coolants and lubricants. However, in accordance with the invention, the O ring 15 is formed of silicone because this is easily compressible and facilitates assembly of the ballscrew assembly. It has been found that the silicone O ring provides an excellent sealing performance, protecting the inside of the ballscrew assembly against contaminants even though the deflector rocks in operation.

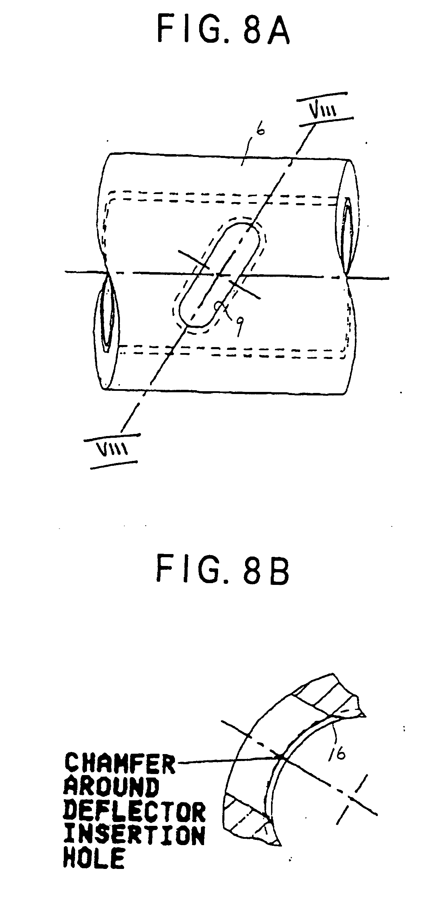

Further, it is also desired that an edge portion 16 (see FIG. 8) of the deflector insertion hole 9 at the inner peripheral side of the nut member 6 is made round (chamfered) by using an air turbine tool by hand or by a machining process. That is, a sharp edge portion 16 of the deflector insertion hole 9 could be rounded.

The deflector 8 provided with the annular seal member 15 is inserted into the deflector insertion hole 9 from the inside of the nut member 6.

Hereunder, a method of manufacturing the screw assembly for rolling members provided with the deflectors of the structures mentioned above will be explained.

First, the ball (rolling member) return groove 11 is formed to the deflector body 8a through an injection molding process or like, and then, the wing portions 8b, 8b projecting from both the side portions 12, 12 of the deflector body 8a are formed in conformity, in shape, with the loaded ball rolling groove 6a.

Next, the O-ring 15 as an annular sealing member having elasticity is mounted to the peripheral portion of the side surface of the deflector body 8a so as to seal the inside portion of the screw assembly.

On the other hand, the deflector insertion hole (slot) 9 is formed to the nut member 6 with a clearance between the side surface of the deflector body 8a and the inner wall section of the deflector insertion hole 9 so that the deflector 8 is swingable therein during the operation of the screw assembly.

Thereafter, the sharp edge portion of the deflector insertion hole 9, disposed on the inner peripheral side of the nut member 6, is removed to provide a round surface.

Finally, the deflector 8 mounted with the O-ring 15 is inserted into the deflector insertion hole 9 from the inside of the nut member 6.

When the deflector 8 is fitted into the deflector insertion hole 9, the wing portions 8b, 8b thereof contact the loaded ball rolling groove 6a of the nut member 6, whereby the deflector 8 is positioned with respect to the nut member 6, and the return groove 11 is also positioned with respect to the loaded ball rolling groove 6a, thus preventing the deflector 8 from coming off in the radial direction of the nut member 6. Further, since a number of balls 7, 7 ---, 7 are disposed between the deflector body 8a and the screw shaft 5, the deflector 8 is supported by these balls 7 in a manner as like as floating from the screw shaft 5 with a constant distance therefrom.

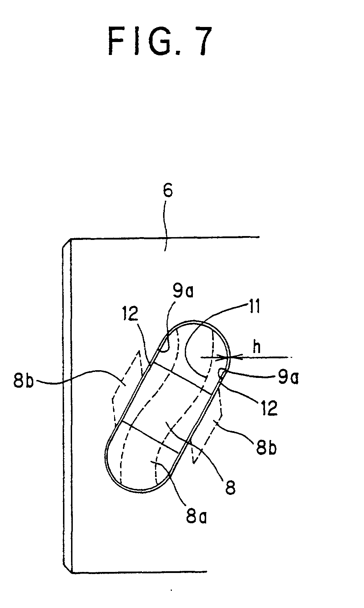

With reference to FIG. 7, being a plan view of the nut member 6 and the deflector 8, as mentioned above, when the deflector 8 is inserted into the deflector insertion hole 9, a clearance h exists entirely between the deflector body 8a and the wall portion 9a of the insertion hole 9. This clearance h is, for example, set to be about 5% of the diameter of the ball 7. According to the presence of such clearance h, the deflector 8 is tilted till the deflector body 8a collides against the wall portion 9a of the deflector insertion hole 9, thus capable of being rocked in the insertion hole 9 during the operation of the screw assembly. Therefore, even if the balls 7 collide against the deflectors 8, the deflectors 8 are rocked and the impact forces of the balls 7 against the deflectors 8 can be attenuated thereby.

Examples of the present invention as ballscrew assembly were manufactured and various tests were carried out in the following manner for the sake of comparison of sealing performance and durability, for example.

### [Example]

An assembled part (Test 1) using an O-ring made of nitrile and another assembled part (Test 2) using an O-ring made of silicone were prepared for comparing sealing performances and durabilities thereof.

### (Test 1)

The O-ring was formed of a nitrile rubber having an oil resistant property and operating temperature of 20 to 100oC. A ballscrew was assembled so as to be applied with a preload of 1.3 kg. The O-ring was placed around the deflector, and the deflector was inserted into the insertion hole (slot) from the inside of the nut member. The insertion of the deflector into the nut member was difficult and took about 3 minutes therefore. This was because the interference of the O-ring required for maintaining good air-tightness (sealing performance) between the deflector and the deflector insertion hole and the hardness of the O-ring.

### (Test 2)

The O-ring was formed of a silicone rubber having an oil resistant property and operating temperature of -70 to 250oC. A ballscrew was assembled so as to be applied with a preload of 1.3 kg. The O-ring was placed around the deflector. A sharp edge portion of the inner peripheral side of the deflector insertion hole was removed by hand with an air turbine tool so as to provide a round surface. Thereafter, the deflector was inserted into the deflector insertion hole (slot) from the inside of the nut member. The assembling took a time less than that in the case of Test 1 because the edge portion of the deflector insertion hole was made round and the O-ring made of silicone was able to be easily compressed.

The thus prepared Tests 1 and 2 as ballscrew assemblies were tested by putting them into a test machine or the like to examine or test what contaminant (contamination) materials pass the deflector inside the nut member. In these tests, different types of materials or mixtures were used. The details of the tests and the test results are shown in the following Tables 1 and 2.

**Table 1**

| (Test 1 using nitrile O-ring) | | |
|---|---|---|
| Mediums or Material used | How Applied | Result |
| Lubrication oil | Poured continuously on nut. Nut was stationary. Shaft was rotated at 100RPM. | No oil entered into nut. |
| Lubrication oil & milling swarf | Same as above | No contaminant entered into nut. |
| Suds oil & water mix | Same as above | Mineral suds entered into nut (90-95% efficient at stopping studs entering nut). |
| Suds oil & water mix with milling swarf | Same as above | Mineral suds entered into nut (90-95% efficient at stopping studs entering nut) No swarf entered into nut. |

A durability test was carried out by running the screw assembly in the test device at 1000 rpm for 8 hours. The screw assembly was then removed from the test device and the deflector thereof was inspected in detail. The observation was resulted in that 2 of 6 O-rings had split and the rest thereof were damaged. The damage was caused due to the interference fit and the sharp edge of the deflector insertion hole at a time of inserting the deflector thereinto.

**Table 2**

| (Test 2 using silicone O-ring) | | |
|---|---|---|
| Mediums or Material used | How Applied | Result |
| Lubrication oil | Poured continuously on nut. Nut was stationary. Shaft was rotated at 100RPM. | No oil entered into nut. |
| Lubrication oil & milling swarf | same as above | No contaminant entered into nut. |
| Suds oil & water mix | same as above | same as above |
| Suds oil & water mix with milling Swarf | same as above | same as above |

A durability test was carried out in the manner as like as in Test 1. The screw assembly was then removed from the test device and the deflector thereof was inspected in detail. The observation was resulted in that non of the silicone O-ring had split as in the test 1, but there was still minimal damage of 3 of 6 O-rings. Such damage was caused by inserting the deflector into the nut. However, the removal of the sharp edge of the deflector insertion hole and the change of the O-ring material could reduce the damage during the assembly.

### Conclusion

From the above tests results, it could be seen that the silicone O-rings stop all swarf and fluids entering into the ballscrew assembly through the deflector, whereas the nitrile O-rings allow a minimal amount of suds and water into the ballscrew assembly but stop the swarf. The amount of subs oil allowed in would be no worse than would be allowed in by the present seals (in which the silicone fills between the deflector and the deflector insertion hole after the insertion of the deflector having no annular seal member). The recommendation would be to use the silicone O-rings as they stop all contaminant going into the ballscrew assembly and they are easier to be assembled.

Further, in the described embodiment, by providing the annular seal member to the deflector body, the interior of the ballscrew assembly is tightly sealed and the deflector is made swingable, but it may be considered that the silicone fills between the deflector and the deflector insertion hole after the insertion of the deflector having no annular seal member into the deflector insertion hole. However, in such alternation, the filling of the silicone will require additional process and take much time and cost, thus being inconvenient. Furthermore, the filling of the silicone will not be made constant, which results in an inadequate sealing. Moreover, the silicone may be peeled off by the vibration of the ballscrew assembly.

It is thus to be noted that the present invention is not limited to the described embodiment and many other changes and modifications may be made without departing from the scopes of the appended claims.

## Claims

1. A screw assembly comprising a screw shaft (5) having an outer peripheral surface on which is formed a first groove (5a) in the form of a spiral having a plurality of turns, a nut member (6) having an inner peripheral surface on which is formed a second groove (6a) in the form of a spiral, and a number of rolling members (7) arranged to be accommodated between said first and second grooves when the nut member is assembled on the screw shaft, and the screw assembly further comprising a deflector (8) mounted on said nut member (6) and arranged to return a rolling member (7) rolling on one turn of said first groove (5a) to a portion of a preceding turn thereof, wherein
said deflector (8) comprises a deflector body (8a) provided with a return groove (11) for returning the rolling member (7), and a pair of wing portions (8b) each projecting from a respective side portion of the deflector body and being shaped to fit into said second groove (6a),
said nut member (6) has a deflector insertion hole (9), and
an elastic seal member (15) is provided around the deflector body (8a) so as to seal an interior of the screw assembly,
said seal member being an O ring and being fitted in an annular groove (14) formed in a circumferential portion of a side surface of the deflector body,
the screw assembly being **characterised in that** said O ring is formed of silicone, and **in that** the deflector insertion hole (9) is arranged to enable rocking of the deflector (8) in operation.

2. A screw assembly as claimed in Claim 1, wherein rocking of the deflector (8) in operation is enabled by a clearance between the deflector insertion hole (9) and the deflector body (8a) inserted therein, and wherein the deflector (8) formed with the O ring (15) has been inserted into the deflector insertion hole from an inside of the nut member.

3. A screw assembly as claimed in Claim 1 or Claim 2, wherein an edge portion (16) of the deflector insertion hole (9) on the inner peripheral side of the nut member (6) is formed to be round or is chamfered.

4. A screw assembly as claimed in any preceding claim, wherein a plurality of deflectors (8) are mounted on the nut member (6) and a plurality of deflector insertion holes (9) are formed in the nut member.

5. A screw assembly as claimed in any preceding claim, wherein the return groove (11) formed in the or each deflector body (8a) has substantially an S-shape for returning the rolling member (7) on one turn of the first groove (5a) to the preceding turn.

6. A method of manufacturing a screw assembly comprising mounting a nut member (6) having an inner peripheral surface in which a second rolling groove (6a) is formed on a screw shaft (5) having an outer peripheral surface in which a first rolling groove (5a) is formed, said first groove (5a) being spiral in form and having a plurality of turns, and mounting a deflector (8) on the nut member (6) such that the deflector is arranged to return a rolling member (7) rolling on one turn of the first groove (5a) to a portion of the preceding turn thereof,
wherein the deflector (8) is composed of a deflector body (8a) formed with a return groove (11) through which the rolling member (7) returns and wing portions (8b) projecting from respective side portions of the deflector body, the wing portions having a shape in conformity with the shape of said second groove (6a) so as to be fitted thereto, a seal member (15) having an elasticity is provided around the deflector body (8a) so as to seal an interior of the screw assembly, said seal member being an O ring (15) fitted into an annular groove (14) formed in a circumferential portion of a side surface of the deflector body, and a deflector insertion hole (9) is formed in the nut member (6),
**characterised in that** said O ring (15) is formed of silicone, and **in that** said deflector insertion hole (9) is arranged to enable rocking of the deflector (8) in operation.

7. A method as claimed in Claim 6, wherein a clearance is provided between the deflector insertion hole (9) and the deflector body (8a) when inserted therein, and the deflector provided with the O ring (15) is inserted into the deflector insertion hole (9) from the inside of the nut member (6).

8. A method of manufacturing a screw assembly as claimed in Claim 6 or Claim 7, wherein an edge portion (16) of the deflector insertion hole (9) on the inner peripheral side of the nut member is removed so as to provide a round surface.

## Patentansprüche

1. Kugelumlaufspindel, die aufweist: eine Spindel (5) mit einer Außenumfangsfläche, an der eine erste Laufrille (5a) in Form einer Spirale mit einer Mehrzahl von Gewindegängen ausgebildet ist, ein Muttern-Element (6) mit einer Innenumfangsfläche, an der eine zweite Laufrille (6a) in Form einer Spirale ausgebildet ist, und eine Anzahl von rollenden Elementen (7), die so angeordnet sind, dass sie sich zwischen der ersten und zweiten Laufrille befinden, wenn das Muttern-Element auf der Spindel montiert ist, und wobei die Kugelumlaufspindel des Weiteren ein Umlenkelement (8) aufweist, das an dem Muttern-Element (6) angebracht und so angeordnet ist, dass ein rollendes Element (7), das auf einem Gewindegang der ersten Laufrille (5a) umläuft, in einen Abschnitt eines vorhergehenden Gewindegangs von dieser rückgeführt wird, wobei
das Umlenkelement (8) einen Umlenkkörper (8a) aufweist, der mit einem Rückführungskanal (11) für die Rückführung des rollenden Elements (7) versehen ist, und ein Paar Flügelteile (8b), welche jeweils von einem entsprechenden Seitenabschnitt des Umlenkkörpers (8a) vorstehen und so geformt sind, dass sie in die zweite Laufrille (6a) passen,
das Muttern-Element (6) ein Einführloch (9) für das Umlenkelement aufweist, und
ein elastisches Dichtelement (15) um den Umlenkkörper (8a) herum so angeordnet ist, dass ein Inneres der Kugelumlaufspindel abgedichtet ist,
das Dichtelement aus einem O-Ring besteht und in eine ringförmige Nut (14) eingepasst ist, die in einem Abschnitt einer Seitenfläche des Umlenkkörpers in Umfangsrichtung ausgebildet ist,
die Kugelumlaufspindel **dadurch gekennzeichnet ist, dass** der O-Ring aus Silikon besteht und dass das Einführloch für das Umlenkelement (9) so angeordnet ist, dass ein Schwingen des Umlenkelements (8) während des Betriebes ermöglicht wird.

2. Kugelumlaufspindel nach Anspruch 1, wobei ein Schwingen des Umlenkelements (8) im Betrieb durch ein zwischen dem Einführloch für das Umlenkelement (9) und dem darin eingesetzten Umlenkkörper (8a) vorhandenes Spiel ermöglicht wird, und wobei das mit dem O-Ring (15) gebildete Umlenkelement (8) von einem Inneren des Muttern-Elements in das Einführloch für das Umlenkelement eingesetzt ist.

3. Kugelumlaufspindel nach Anspruch 1 oder Anspruch 2, wobei ein Kantenabschnitt (16) des Einführlochs für das Umlenkelement (9) auf der Innenumfangsfläche des Muttern-Elements (6) abgerundet oder gefast ausgebildet ist.

4. Kugelumlaufspindel nach einem der vorherigen Ansprüche, wobei eine Mehrzahl von Umlenkelementen (8) an dem Muttern-Element (6) angebracht und eine Mehrzahl von Einführlöchern für ein Umlenkelement (9) in dem Muttern-Element ausgebildet sind.

5. Kugelumlaufspindel nach einem der vorherigen Ansprüche, wobei der in dem oder jedem Umlenkkörper (8a) ausgebildete Rückführungskanal (11) im Wesentlichen S-förmig gestaltet ist, um das rollende Element (7) in einem Gewindegang der ersten Laufrille (5a) zu dem vorherigen Gewindegang rückzuführen.

6. Verfahren zum Herstellen einer Kugelumlaufspindel, das aufweist: Montieren eines Muttern-Elements (6) mit einer Innenumfangsfläche, auf der eine zweite Laufrille (6a) ausgebildet ist, auf einer Spindel (5) mit einer Außenumfangsfläche, an der eine erste Laufrille (5a) ausgebildet ist, wobei die erste Laufrille (5a) die Form einer Spirale und eine Mehrzahl von Gewindegängen aufweist, und Montieren eines Umlenkelements (8) an dem Muttern-Element (6) in der Art, dass das Umlenkelement so angeordnet ist, dass ein rollendes Element (7), das auf einem Gewindegang der ersten Laufrille (5a) umläuft, zu einem Abschnitt des vorhergehenden Gewindegangs von dieser rückgeführt wird
wobei das Umlenkelement (8) aus einem Umlenkkörper (8a) besteht, das mit einem Rückführungskanal (11) versehen ist, durch den das rollende Element (7) zurückläuft, und mit Flügelteilen (8b), die an den entsprechenden Seitenteilen des Umlenkkörpers vorstehen, wobei die Flügelteile dergestalt ausgeführt sind, dass sie von der Form her mit der Form der zweiten Laufrille (6a) übereinstimmen, um hieran befestigt werden zu können, wobei ein elastisches Dichtelement (15) den Umlenkkörper (8a) so umschließt, dass ein Inneres der Kugelumlaufspindel abgedichtet ist, wobei das Dichtelement ein O-Ring (15) ist, der in eine ringförmige Nut (14) eingepasst ist, die in einem in Umfangsrichtung verlaufenden Abschnitt der Seitenfläche des Umlenkkörpers ausgebildet ist, und wobei ein Einführloch (9) für das Umlenkelement in dem Muttern-Element (6) ausgebildet ist,
**dadurch gekennzeichnet, dass** der O-Ring (15) aus Silikon besteht und das Einführloch (9) für das Umlenkelement so angeordnet ist, dass ein Schwingen des Umlenkelements (8) während des Betriebs ermöglicht wird.

7. Verfahren nach Anspruch 6, wobei zwischen dem Einführloch (9) für das Umlenkelement und dem Umlenkkörper (8a) in eingesetztem Zustand ein Spiel vorgesehen wird, und das mit dem O-Ring (15) versehene Umlenkelement von der Innenseite des Muttern-Elements (6) her in das Einführloch für das Umlenkelement (9) eingesetzt wird.

8. Verfahren zum Herstellen einer Kugelumlaufspindel nach Anspruch 6 oder Anspruch 7, wobei ein Kantenabschnitts (16) des Einführlochs (9) für das Umlenkelement an der Innenumfangsfläche des Muttern-Elements entfernt wird, um eine runde Fläche auszubilden.

## Revendications

1. Un ensemble à vis, comprenant un arbre fileté (5) ayant une surface périphérique extérieure, sur laquelle est formée une première gorge (5a) ayant la forme d'une spirale comprenant une pluralité de spires, un organe formant écrou (6) ayant une surface périphérique intérieure, sur laquelle est formée une deuxième gorge (6a) ayant la forme d'une spirale, et une pluralité d'organes de roulement (7), agencés pour être logés entre lesdites première et deuxième gorges, lorsque l'organe formant écrou est assemblé sur l'arbre de vis, et l'ensemble à vis comprenant en outre un déflecteur (8) monté sur ledit organe formant écrou (6), et agencé pour faire revenir un organe de roulement (7), roulant sur une spire de ladite première gorge (5a), vers une partie d'une spire la précédant, dans lequel
ledit déflecteur (8) comprend un corps de déflecteur (8a), pourvu d'une gorge de retour (11), afin de faire revenir l'organe de roulement (7), et d'une paire de parties d'ailettes (8b), faisant chacune saillie depuis une partie latérale respective du corps de déflecteur, et conformée pour s'ajuster dans ladite deuxième gorge (6a),
ledit organe formant écrou (6) présente un trou d'insertion de déflecteur (9), et un organe d'étanchéité (15) élastique est prévu autour du corps de déflecteur (6a) pour fermer hermétiquement le volume intérieur de l'ensemble à vis,
ledit organe d'étanchéité étant formé d'un élément torique, et étant monté dans une gorge annulaire (14) formée dans une partie circonférentielle d'une surface latérale du corps de déflecteur,
l'ensemble à vis étant **caractérisé en ce que** ledit élément torique est réalisé en silicone, et **en ce que** le trou d'insertion de déflecteur (9) est agencé pour permettre un basculement du déflecteur (8), en fonctionnement.

2. Un ensemble à vis selon la revendication 1, dans lequel le basculement du déflecteur (8) en fonctionnement est autorisé par un jeu, existant entre le trou d'insertion de déflecteur (9) et le corps de déflecteur (8a) y étant inséré, et dans lequel le déflecteur (8), formé avec l'élément torique (15), a été inséré dans le trou d'insertion de déflecteur depuis l'intérieur de l'organe formant écrou.

3. Un ensemble à vis selon la revendication 1 ou la revendication 2, dans lequel une partie de bordure (16) du trou d'insertion de déflecteur (9), sur le côté périphérique intérieur de l'organe formant écrou (6), est conformée de façon arrondie ou est chanfreinée.

4. Un ensemble à vis selon l'une quelconque des revendications précédentes, dans lequel une pluralité de déflecteurs (8) sont montés sur l'organe formant écrou (6), et une pluralité de trous d'insertion de déflecteur (9) sont formés dans l'organe formant écrou.

5. Un ensemble à vis selon l'une quelconque des revendications précédentes, dans lequel la gorge de retour (11), formée dans le ou chaque corps de déflecteur (8a), a sensiblement une forme en S, pour ramener l'organe de roulement (7) d'une spire de la première gorge (5a) à la spire précédente.

6. Un procédé de fabrication d'un ensemble à vis, comprenant le montage d'un organe formant écrou (6) ayant une surface périphérique intérieure, dans laquelle une deuxième gorge de roulement (6a) est formée sur un arbre fileté (5) ayant une surface périphérique extérieure, dans laquelle une première gorge de roulement (5a) est formée, ladite première gorge (5a) étant de forme spirale et comportant une pluralité de spires, et le montage d'un déflecteur (8) sur l'organe formant écrou (6), de manière que le déflecteur soit agencé pour ramener un organe de roulement (7), roulant sur une spire de la première gorge (5a), vers une partie de sa spire précédente,
dans lequel le déflecteur (8) est composé d'un corps de déflecteur (8a) muni d'une gorge de retour (11), par laquelle l'organe de roulement (7) retourne, et de parties d'ailettes (8b), faisant saillie depuis des parties latérales respectives du corps de déflecteur, les parties d'ailettes ayant une forme se conformant à la forme de ladite deuxième gorge (6a) pour y être montée, un organe d'étanchéité (15), ayant une certaine élasticité, est prévu autour du corps de déflecteur (8a) pour fermer hermétiquement le volume intérieur de l'ensemble à vis, ledit organe d'étanchéité étant un élément torique (15) monté dans une gorge annulaire (14), ménagée dans une partie circonférentielle d'une surface latérale du corps de déflecteur, et un trou d'insertion de déflecteur (9) est formé dans l'organe formant écrou (6),
**caractérisé en ce que** ledit élément torique (15) est formé en silicone, et **en ce que** ledit trou d'insertion de déflecteur (9) est agencé pour permettre le basculement du déflecteur (8) en fonctionnement.

7. Un procédé selon la revendication 6, dans lequel un jeu est prévu entre le trou d'insertion de déflecteur (9) et le corps de déflecteur (8a), lorsqu'il y est inséré, et le déflecteur muni de l'élément torique (15) est inséré dans le trou d'insertion de déflecteur (9) depuis l'intérieur de l'organe formant écrou (6).

8. Un procédé de fabrication d'un ensemble à vis selon la revendication 6 ou la revendication 7, dans lequel une partie de bordure (16) du trou d'insertion de déflecteur (9), sur la face périphérique intérieure de l'organe formant écrou, est enlevée de façon à fournir une surface ronde.
